# EUROPÄISCHE PATENTANMELDUNG

(11) **EP 4 552 729 A1**
(43) Veröffentlichungstag der Anmeldung: **14.05.2025**
(21) Anmeldenummer: 23208999.5
(22) Anmeldetag: 10.11.2023
(51) Int. Cl.: B01D 53/14

(54) **VERFAHREN UND VORRICHTUNG ZUR DYNAMISCH GESTEUERTEN PASSIVEN ABSORPTION VON KOHLENSTOFF-DIOXID AUS DER ATMOSPHÄRE UNTER EINSATZ KÜNSTLICHER INTELLIGENZ: DYNAMISCH PASSIVE ABSORPTIONSTURM TECHNOLOGIE (DPAT)**

(71) Anmelder: Noratu GmbH, 59348 Lüdinghausen (DE)
(72) Erfinder: Gutsch, Jan, Karlsruhe (DE); Gutsch, Moritz, Münster (DE); Gutsch, Andreas, Lüdinghausen (DE)

(57) **Zusammenfassung**

Gas aus der Atmosphäre dringt aufgrund der natürlichen atmosphärischen Bedingungen, ohne die Verwendung von zusätzlicher Energie in eine Absorptionsvorrichtung, die mindestens zu zwei Seiten geöffnet ist und mindestens eine frei zugängliche homogene, planare, nicht disperse Flüssigkeitsoberfläche enthält, wobei die, die Flüssigkeitsoberfläche bildende Flüssigkeit, dazu geeignet ist Kohlendioxid aus dem atmosphärischen Gas zu absorbieren.

**Technisches Gebiet**

Die hier vorliegende Erfindung betrifft ein Verfahren, ein Vorgehen und eine Vorrichtung zur Absorption von Kohlenstoffdioxid aus der Atmosphäre.

## Beschreibung

### 1. Stand der Technik

In den vergangenen Jahrzehnten ist ein zunehmender Anstieg der Oberflächen- und Meerestemperatur auf der Erde beobachtet worden. Emissionen von Treibhausengasen (GHG) sind hauptsächlich für diesen Temperaturanstieg verantwortlich^{1,2}. Zwischen 1850 und 2023 stieg die mittlere, globale Oberflächentemperatur der Erde um etwa 1.2°C². Gleichzeitig erhöhte sich die Konzentration von Kohlenstoffdioxid (CO₂), einem zentralen Treibhausgas, von 325 ppm (1960) auf 415 ppm (2020)². Diese, auch als Klimawandel bezeichnetet Situation, führt mittelbar zu einer weiter ansteigenden Temperatur auf der Erde. Steigende Temperaturen erhöhen die Wahrscheinlichkeit von extremen Wetterereignissen, beispielsweise Dürren oder Überschwemmungen, die Kosten für Mensch und Umwelt nach sich ziehen³.

Zur Minimierung zukünftiger Umweltschäden gibt es weltweit Bemühungen die Emissionen von Treibhausgasen, und insbesondere CO₂, zu reduzieren. Der Einsatz erneuerbaren Energien, beispielweise Windkraft, Wasserkraft oder Photovoltaik und die vermehrte Nutzung von damit angetriebenen elektrischen Fahrzeugen anstatt Verbrennerfahrzeugen, sowie die zunehmende Nutzung von grünem Wasserstoff, stellt eine Möglichkeit zur Reduktion von zukünftigen CO₂ Emissionen dar. Neben der Vermeidung des Einsatzes von kohlenwasserstoffhaltigen Energieträgern gibt es zusätzlich erheblich Bestrebungen die CO₂ Emissionen durch das Abscheiden von CO₂ aus industriellen Abgasströmen zu reduzieren. Diese als "Carbon Capture and Storage" (CCS) bezeichneten Technologien werden allerdings bisher ausschließlich an größeren, zentralen Emissionsquellen, wie z.B. Zementwerken, Kraftwerken, Chemieanlagen getestet bzw. eingesetzt. Die CO₂ Konzentrationen im zu behandelnden Abgas liegen dabei in der Regel deutlich oberhalb von 10.000 ppm. Die Abscheidung des CO₂ aus diesen Abgasen erfolgt zumeist mit Hilfe von Gaswäschern, bei denen eine zur Absorption geeignete Flüssigkeit in intensiven Kontakt mit dem Abgas gebracht wird. Diese Gaswäscher sind nach dem Stand der Technik in der Regel vertikale, zur Umgebung geschlossene Konstruktionen, in denen die Absorptionsflüssigkeit sehr fein verteilt als hoch disperses Fluid im Gleichstrom, Gegenstrom oder Querstrom mit dem Abgasstrom in Kontakt gebracht wird, wobei das Abgas durch den Einsatz von Ventilatoren oder Pumpen oder anderen geeigneten Fördervorrichtungen unter zu Hilfenahme von zusätzlicher Energie zwangsgefördert wird.

Bei der Bewertung von industriellen CCS-Technologien ergeben sich es vier bedeutsame Problemstellungen. Erstens werden dezentrale, d.h. in der Fläche verteilte CO₂ Emissionen in bestimmten Anwendungen und Regionen auch zukünftig schwer zu vermeiden sein. Beispielsweise wird der kommerzielle Flugverkehr noch viele Jahrzehnte auf Basis der Verwendung von Kohlenwasserstoffen deren Oxidationsprodukt Kohlendioxid ist, stattfinden. Ebenso werden große Teile des Waren- und Güterverkehrs (Schiff, LKW) nur sehr langsam und ggf. weit in der Zukunft liegend auf Kohlenwasserstofffreie Antriebe umgestellt werden. Neben diesen beiden Problemen stellt sich zusätzlich das regionale Problem der zeitlich versetzen Dekarbonisierung. Insbesondere wirtschaftlich schwächere Länder haben kaum ausreichend Kohlenwasserstofffreie Energieträger zur Verfügung und werden diese auch nicht mittelbar haben. Im Ergebnis wird also mindestens in den oben dargestellten Anwendungsfeldern auch in Zukunft weltweit CO₂ dezentral, d.h. weit verteilt in der Fläche von Millionen von kleineren und größeren mobilen und stationären Emissionsquellen emittiert. Zu den drei bereits benannten Problemfeldern gibt es ein weiteres, signifikantes Problem und das ist die Substitution von Kohlenwasserstoffen in der chemischen Industrie. Es gibt derzeit keine marktreifen Alternativen zu der Verwendung von Kohlenwasserstoffen in der chemischen Industrie. Nahezu alle Produkte und Materialien der organischen Chemie, basieren heute noch auf der Verwendung von fossilen Kohlenwasserstoffen, deren langfristiges Abbauprodukt ebenfalls Kohlendioxid ist.

Die oben genannten Problemfelder sind eng verbunden mit der durch den Menschen bestimmten Verwendung von Kohlenwasserstoffen und könnten daher zumindest theoretisch durch weitere technische Maßnahmen nahezu vollständig als Emissionsquellen eliminiert werden. Anders ist dies allerdings bei den aus dem Klimawandel resultierenden Emissionen von CO₂. Es ist bekannt das in den oberen Bodenschichten der Erdoberfläche riesige Mengen an organischen Materialien eingelagert sind. Dies sind z.T. komplexe organische Verbindungen aber auch einfache Verbindungen wie Methan, als eingelagertes Gas in den Permafrostböden. Die Klimaerwärmung trägt dazu bei, dass die in den Böden eingelagerten Kohlenwasserstoffe durch mikrobielle Prozesse, wie auch durch Desorption bei steigenden Temperaturen, vermehrt in die Atmosphäre übertreten. Das Abbauprodukt dieser organischen Substanzen ist wiederum CO₂, das die weitere globale Temperaturerhöhung beschleunigt. Zusätzlich ergibt sich das Problem, dass durch die globale Erwärmung die Temperatur der Ozeane steigt und dabei die Löslichkeit von Kohlendioxid in den oberflächennahen Gewässerbereichen abnimmt, wodurch die Kapazität dieser sehr großen Kohlendioxid Senken abnimmt.

Im Ergebnis stellt sich die Aufgabe nicht nur dezentrale zukünftige Kohlendioxid Emissionen zu neutralisieren, sondern auch historische CO₂ Emissionen (in Teilen) zu revidieren. Um eine CO₂ Konzentration auf Vor-Industriellem Niveau zu erreichen, wäre bei sofortigem Stopp aller Treibhausgasemissionen eine kumulierte Entfernung von etwa 2,300 GtCO₂ aus der Atmosphäre notwendig³. Natürliche Prozesse, beispielsweise Wachstum von Wäldern, sind in der Lage CO₂ aus der Atmosphäre zu binden, und so einen Beitrag zur CO₂ Reduktion zu leisten. Allerdings stellen Flächenbedarf und Geschwindigkeit dieser natürlichen Prozesse Herausforderungen dar. Vor diesem Hintergrund gewinnen technische Verfahren, die eine direkte Entfernung von CO₂ aus der Atmosphäre ermöglichen an Bedeutung. Diese technischen Verfahren sind aktuell auch unter dem Begriff "Direct Air Capture" (DAC) bekannt^{4,5}.

Direct Air Capture Prozesse beinhalten zwei wesentliche Bestandteile. In einem ersten Schritt wird CO₂ aus Luft, die die DAC-Anlage durchströmt, chemisch oder physikalisch an einem geeigneten Sorptionsmedium gebunden. Die technische Einheit, in der dies stattfindet wird als Kontaktor bezeichnet. Anschließend wird CO₂ aus dem Sorptionsmedium durch geeignete Verfahren in möglichst hoher Konzentration gewonnen (sog. Regeneration). Da neben CO₂ auch andere Stoffe aus der Atmosphäre im DAC-Prozess aufgenommen werden, insbesondere Wasser, ist eine geeignete Separation von Wasser und CO₂ in der Regeneration sicherzustellen. Die eingesetzten Sorptionsmedien liegen meist in flüssiger oder fester Form vor⁶. Flüssige Sorptionsmedien sind wässrige alkalische Hydroxid Lösungen (vgl. WO2009155539A2⁷) und wässrige Lösungen aus Aminen oder Aminosäuren^{6,8,9}. Feste Sorptionsmedien bestehen u.a. aus Aminen die auf eine Gerüststruktur (bspw. Silica) aufgetragen sind⁶. Zur Regenerierung der Sorptionsmedien sind verschiedene Prozessführungen möglich, die geeignet sind, Gleichgewichte der CO₂ Reaktionen zu beeinflussen. Variation von Temperatur, Druck, Luftfeuchtigkeit, sowie Kristallisation sind möglich¹⁰.

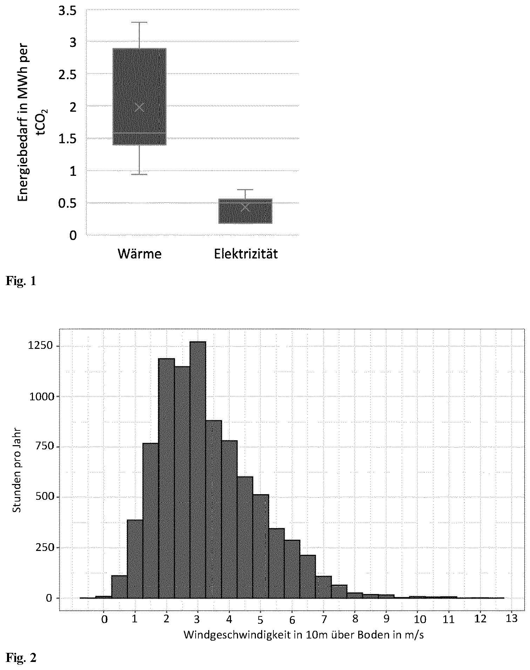

Um einen nachhaltigen, positiven Beitrag zum Klimaschutz zu leisten, gilt es sicherzustellen, dass die Treibhausgasemissionen, die mit der Entfernung von 1 Tonne CO₂ aus der Atmosphäre verbunden sind, so niedrig wie möglich sind. Lebenszyklusanalysen deuten darauf hin, dass ein möglichst niedriger Energiebedarf und die Nutzung erneuerbarer Energien für DAC-Anlagen essentiell sind^{11,12}. Haupttreiber des Energiebedarfs von bekannten DAC-Anlagen ist der Wärmebedarf für die Regenerierung der Sorptionsmedien, sowie Elektrizität für den Betrieb von Gebläsen und Ventilatoren um die notwendigen großen Luftmengen, innerhalb des Kontaktors mit dem Sorptionsmedium in Berührung zu bringen^{12,13}. DAC-Anlagen nach aktuellem Stand der Technik, benötigen ca. 500 kWh Elektrizität je absorbierte Tonne CO₂, siehe Fig. 1. Der Elektrizitätsbedarf entsteht dabei hauptsächlich durch den Betrieb der Lüfter/Ventilatoren. Für die Regenerierung des Absorptionsmedium wird in der Regel thermische Energie zwischen 1,5 und 3 MWh je Tonne CO₂ benötigt. Auf Grund der generell höheren Kosten für 1 MWh Elektrizität verglichen mit 1 MWh thermischer Energie, ist die Reduktion des Elektrizitätsverbrauchs zentral für die wirtschaftliche und ökologische Wettbewerbsfähigkeit von DAC-Anlagen. Unabhängig vom Aufbau der DAC Anlage ist ein niedriger Druckverlust innerhalb des Kontaktors aus energetischer Sicht erstrebenswert.

Vorschläge zum Aufbau von DAC Kontaktoren für flüssige Sorptionsmaterialien sind in WO2010022339A2¹⁴ dargestellt. Flüssiges Sorptionsmedium und Luft werden in einem "Cross-Flow" Verfahren miteinander in Kontakt gebracht. Zur Vergrößerung der Oberfläche werden Kontaktoren regelmäßig mit Füllstoffen ausgestattet, die einen großflächigen Kontakt zwischen flüssigem Sorptionsmedium und Luft ermöglichen. Mit aktuellen Füllstoffen werden Oberflächen zu Volumenverhältnisse von 400 bis 900 m²/m³ erreicht¹⁵. Vorschläge zum Aufbau von DAC Kontaktoren mit festen Sorptionsmaterialien werden in US20120174793A1¹⁶ gezeigt. Feste Sorptionsmaterialien werden häufig in Form von Monolithen oder Fasern eingesetzt⁶. Zur Erhöhung der Prozesssicherheit und Minimierung von Verschleiß werden für feste Sorptionsmedien Kontaktoren mit möglichst wenigen bewegten Teilen empfohlen (WO2020212146A1¹⁷). WO2021239747A1¹⁸ stellt ein Konzept zur Anordnung von parallelen, mit festem Sorptionsmedium versehenen Platten, als widerstandsarmes Design für DAC Kontaktoren vor. Die regelmäßige Einströmgeschwindigkeit der Luft soll zwischen 2 und 9 m/s liegen.

Sowohl bei Kontaktoren für feste als auch flüssige Sorptionsmedien findet nach aktuellem Stand der Technik eine Skalierung zu höheren Produktionskapazitäten durch multiple Anordnung statt^{11,19}. US11389761B1²⁰ und WO2023144018A1²¹ stellen DAC Kontaktoren mit mehreren Lüftern dar, um den benötigten Luftstrom zu erreichen. Allerdings liegt ein zentrales Problem diesen Designs in der Tatsache, dass ein nicht unerheblicher Anteil der Lüfter entgegengesetzt zur natürlichen Zirkulation der Umgebungsluft steht. Dies führt zu einer reduzierten Effizienz des Luftdurchsatzes, und einem steigenden Energiebedarf. Außerdem folgen die Konzepte nach US11389761B1²⁰ und WO2023144018A1²¹ auf Grund eines erheblichen Anteils an beweglichen Bauteilen nicht unbedingt den Maßgaben für ein möglichst wartungsfreies DAC-Design.

Konzepte zur Nutzung der natürlichen Ventilation der Atmosphäre, die in Windkraftanlagen bereits zur Gewinnung von elektrischer Energie genutzt wird, sind in jüngster Vergangenheit vorgestellt worden. WO2023102237A1²², US20230046271A1²³, US20230119882A1²⁴ und WO2023064317A1²¹ präsentieren Konzepte für sogenannte passiven Kontaktoren, die ohne Einsatz von Lüftern auskommen. Die Konzepte beschränken sich allerdings auf die Konstruktion von passiven Kontaktoren für feststoffbasierte Sorptionsmedien, und besitzen eine hohe mechanische Komplexität (WO2023064317A1²⁵, US20230119882A1²⁴), sowie die Nachteile der diskontinuierlichen, ortsfesten Regeneration des Adsorbens, die zu einer reduzierten und nur zyklisch verfügbaren Nutzung des Gesamtsystems führen sowie einen hohen Anteil von nicht wirksamen, latenten Massen der Tragwerke und Trägermaterialien besitzen. Diese Nachteile schränken die Flexibilität und Effektivität der Technologie erheblich ein und führen zu hohen Energieverbräuchen. Ebenso sind bei dieser Technologie nur sehr aufwendig dynamischen Anpassungen des Adsorbens (Konzentration, Beladung) auf variierende, saisonale oder tageszeitliche Veränderungen der Umgebungsbedingungen möglich. Dasselbe gilt für die Ausschleusung von degeneriertem Adsorbens, dieses ist nicht partiell austauschbar oder partiell substituierbar. In der Regel muss also das gesamte feste Aktivmaterial einer Einheit und ggf. auch noch die festen Trägerelemente ausgetauscht werden. Das gleiche gilt für die spätere, bei technischen Prozessen übliche, weitere Verbesserung der Verfahrenstechnologie im Verlauf des Betriebs. Bei feststoffbasierten Adsorptionstechnologien ist eine nachträgliche Änderung oder Ergänzung der chemischen Zusammensetzung aufgrund von neuen Erkenntnissen oder Erfahrungszugewinn nicht oder nur sehr aufwendig möglich. Ein weiterer Nachteil ist, dass in den statischen, feststoffbasierten Adsorbern keine zeitlich veränderlichen regelbaren räumliche Konzentrationsgradienten des Aktivmaterials eingestellt werden können. Dadurch lässt es sich nicht vermeiden, dass das nachströmende atmosphärische Gas mit zunehmender Zeit durch bereits vollständig mit CO₂ beladene Bereiche strömen muss, weil eine unvermeidbare Beladungsfront in dem Adsorber entsteht. Deshalb wird mit zunehmender Betriebsdauer entweder ein unnötig großer, bereits beladener inaktiver Bereich durchströmt (vermeidbarer Druckverlust), oder die Adsorption wird vorzeitig beendet und abstromseitige Bereiche, die noch nicht vollständig beladen sind, werden unnötigerweise energieintensiv regeneriert.

### Referenzen

1 Crowley, T. J. Causes of climate change over the past 1000 years. Sci. 289, 270-277, doi:10.1126/science.289.5477.270 (2000).
2 Matthews, H. D. & Wynes, S. Current global efforts are insufficient to limit warming to 1.5°C. Sei. 376, 1404-1409, doi:10.1126/science.abo3378 (2022).
3 IPCC. Synthesis Report of the IPCC Sixth Assessment Report (AR6): Summary for Policymαkers. (in press, 2023).
4 IEA. DirectAir Capture 2022. (IEA, 2022).
5 Bui, M. et al. Carbon capture and storage (CCS): The way forward. Energy Environ. Sei. 11, 1062-1176, doi:10.1039/c7ee02342a (2018).
6 Erans, M. et al. Direct air capture: process technology, techno-economic and socio-political challenges. Energy Environ. Sci. 15, 1360-1405, doi:10.1039/d1ee03523a (2022).
7 Keith, D. & Mahmoudkhani, M. WO2009155539A2: Carbon dioxide capture. (2009).
8 Ramezani, R., Mazinani, S. & Di Felice, R. State-of-the-art of CO2capture with amino acid salt solutions. Rev. Chem. Eng. 38, 273-299, doi:10.1515/revce-2020-0012 (2022).
9 Custelcean, R. Direct Air Capture of CO2 Using Solvents. Annu Rev Chem Biomol Eng 13, 217-234, doi:10.1146/annurev-chembioeng-092120-023936 (2022).
10 Wu, X., Krishnamoorti, R. & Bollini, P. Technological Options for Direct Air Capture: A Comparative Process Engineering Review. Annu Rev Chem Biomol Eng 13, 279-300, doi:10.1146/annurev-chembioeng-102121-065047 (2022).
11 Madhu, K., Pauliuk, S., Dhathri, S. & Creutzig, F. Understanding environmental trade-offs and resource demand of direct air capture technologies through comparative life-cycle assessment. Nat. Energy, doi:10.1038/s41560-021-00922-6 (2021).
12 Deutz, S. & Bardow, A. Life-cycle assessment of an industrial direct air capture process based on temperature-vacuum swing adsorption. Nat. Energy 6, 203-213, doi:10.1038/s41560-020-00771-9 (2021).
13 Simon, B. Material flows and embodied energy of direct air capture: A cradle-to-gate inventory of selected technologies. J. Ind. Ecol., doi: 10. 111 1/j icc. 13 3 57 (2023).
14 Keith, D. et al. WO2010022339A2: Carbon dioxide capture method and facility. (2010).
15 Kasturi, A. et al. An effective air-liquid contactor for CO2 direct air capture using aqueous solvents. Separation and Purification Technology 324, doi:10.1016/j.seppur2023.124398 (2023).
16 Eisenberger, P. US20120174793A1: Carbon dioxide capture/regeneration apparatus. (2012).
17 Suter, R., Megerle, B., Repond, N., Gebald, C. & Wurzbacher, J. WO2020212146A1: High troughput direct air capture device for capturing CO2 from air and method of its operation. (2020).
18 A., S., Megerle, B., Calbry-Muzyka, A., Casas, N. & Wurzbacher, J. WO2021239747A1: Method for capture of carbon dioxide from ambient air and corresponding adsorber structures with a plurality of parallel surfacs. (2021).
19 Keith, D. W., Holmes, G., St. Angelo, D. & Heidel, K. A Process for Capturing CO2 from the Atmosphere. Joule 2, 1573-1594, doi:10.1016/j.joule.2018.05.006 (2018).
20 Stark, J. US 11389761B1: System and method for improving the performance and lowering the cost of atmospheric carbon dioxide removal by direct air capture. (2022).
21 Hjalmarsson, C., Jaksch, P., Svensson, O. & Szijarto, J. WO2023144018A1: Direct air capture system. (2023).
22 Sikka, V WO2023102237A1: Low-power direct air carbon capture system. (2023).
23 Lee, J. Y. & Priye, A. US20230046271A1: Energy-efficient direct CO2 capture system from air for high-purity CO2 recovery. (2023).
24 Lackner, K. S. & Page, R. US20230119882A1: Passive CO2 capture device with a helical sorbent structure. (2023).
25 Lackner, K. S., Kedia, S., Carlson, B. & Choodamani, V WO2023064317A1: Device and method for passive collection of atmospheric carbon dioxide with a double-walled harvest chamber. (2023).

### 2. Beschreibung

Die hier vorgestellte Erfindung überwindet die oben beschriebenen Nachteile des Standes der Technik und stellt ein Verfahren und eine Vorrichtung zur Absorption von CO₂ in einem flüssigen Absorbent unter Nutzung der natürlichen Bewegung des freien atmosphärischen Gases bedingt durch die natürlichen lokalen Druckunterschiede in der Atmosphäre. Dabei ist die Verwendung eines flüssigen Absorptionsmediums in einer zur Umgebung offenen Vorrichtung im Vergleich zu dem im Stand der Technik dokumentierten festen Adsorbern für die vorliegende Erfindung ein ausgezeichneter Vorteil, da durch den Einsatz eines flüssigen Absorptionsmediums sowohl die CO₂-Absorption als auch die Regenration des flüssigen Absorptionsmediums als Funktion der momentanen Prozessbedingungen wie Temperatur, Wassergehalt und Geschwindigkeit des atmosphärischen Gases, Beladungszustand des Absorbers und Verfügbarkeit von regenerativer elektrischer und thermischer Energie dynamisch reguliert werden können. Zusätzlich kann die Absorptionsflüssigkeit sehr gut thermisch konditioniert oder vorkonditioniert werden und die Konzentration der aktiven Substanzen im Absorptionsmedium kann sehr einfach lokal an verschiedenen Stellen in der Vorrichtung und zeitlich veränderlich gesteuert und geregelt werden. Gleiches gilt für eine partielle oder teilweise Ausschleusung des Absorptionsmediums. Auch kann die Regenration bzw. Aufbereitung des Absorptionsmediums räumlich und zeitlich getrennt von der Absorption und ggf. unter Verwendung von Vorrats- oder Lagerbehältern stattfinden und ermöglicht so einen vollkontinuierlichen hochflexiblen Betrieb des gesamten Verfahrens und verhindert darüber hinaus das unnötige Aufheizen von passiven Baugruppen wie es beim Einsatz von ortsfesten Feststoffabsorbern der Fall ist.

Aufgrund der erfindungsgemäßen Ausgestaltung der Absorptionsvorrichtung und der dynamischen Steuerung und Regelung wird das Redispergieren, also das Ablösen von Flüssigkeitstropfen oder Flüssigkeitsfragmenten aus der Absorptionsflüssigkeit ausgeschlossen. Dies ist von sehr hoher Bedeutung, da freie Tropfen oder Flüssigkeitsfragmente, die in den Gasstrom redispergiert werden, einen unerwünschten Schlupf von CO₂ und einen unerwünschten Verlust von Absorptionsflüssigkeit zu Folge haben. In den bereits beschriebenen Gaswäschern, die zur Absorption von CO₂ aus technischen Abgasen eingesetzt werden, sind immer umfangreiche und sehr energieintensive Maßnahmen erforderlich, um die redispergierten Tropfen und Flüssigkeitsfragmente der Absorptionsflüssigkeit zurückzuhalten (Tropfenabscheider, Zyklone, Filter, Vliese oder Kombination derselben). Dieser Nachteil wird durch die vorliegende Erfindung ausgeschlossen.

Die dynamisch regulierbaren Parameter der Erfindung in Zusammenhang mit der konstruktiven Ausgestaltung führen zu eine neuen Verfahrenskonzept das als "dynamisch passive Absorptionsturm Technologie" (DPAT) bezeichnet wird. Mit DPAT wird ein energieeffizienter und optimal an die Umgebungsbedingungen angepasster CO2 Absorptionsprozess realisiert. Wie in Fig. 2 exemplarisch dargestellt, variiert die natürliche Windgeschwindigkeit. Bekannte DAC-Anlagen mit Lüfter oder Ventilatoren arbeiten mit einstellbaren Über- bzw. Durchströmungsgeschwindigkeit während der Beladung mit Kohlendioxid. Die bei der Beladung relevanten Vorgänge des Stofftransports und Stoffübergangs werden dabei durch die eingestellt Gasgeschwindigkeit gesteuert. Die Nutzung natürlicher, variabler Überströmungsgeschwindigkeiten im hier entwickelten Verfahren fordern eine variable Anpassung auf der Seite des Absorptionsmediums, da die Eigenschaften des atmosphärischen Gases und dessen Geschwindigkeit den lokalen natürlichen Umgebungsbedingungen unterliegen. Die Einstellung der jeweils optimalen Absorptionsbedingungen wird bei der vorliegenden Erfindung erst durch den Einsatz eines flüssigen Absorptionsmediums möglich. Im Gegensatz zum Stand der Technik wird bei der vorliegenden Erfindung nicht die Gasseite des Prozesses gesteuert sondern vielmehr die Flüssigphase, so dass unter den gasseitig vorliegenden Bedingungen jeweils das optimale Absorptionsergebnis erzielt wird. Nicht die Gasphase zu steuern und artifiziell zu bewegen sondern die flüssige Phase zu steuern und zu bewegen, führt bei der CO₂ Absorption aufgrund des hohen Dichteunterschieds von Gas und Flüssigkeit sowie aufgrund der weitaus höheren CO₂ Konzentration in der flüssigen Phase zu einem erheblich niedrigeren spezifischen Energieverbrauch pro Masseeinheit CO₂.

### 2.1. Funktion & Aufbau

Gegenstand der Erfindung ist ein Verfahren und eine Vorrichtung zur Entfernung von CO2 aus atmosphärischem Gas, welches dadurch gekennzeichnet ist, dass das atmosphärische Gas aufgrund der natürlichen Umgebungsbedingungen in die erfindungsgemäße Vorrichtung eindringt und dabei in Kontakt mit mindestens einer planaren nicht dispersen Flüssigkeitsoberflächen kommt, wobei die planare nicht disperse Flüssigkeitsoberfläche mindestens eine Substanz enthält die geeignet ist CO₂ zu absorbieren, so dass der CO₂ Partialdruck unmittelbar oberhalb der Flüssigkeitsoberfläche bei den in der Vorrichtung vorherrschenden Bedingungen kleiner ist als der CO₂ Partialdruck des eingedrungenen atmosphärischen Gases, wobei die zur Absorption von CO₂ geeignete Flüssigkeit der erfindungsgemäßen Vorrichtung unter Anwendung von Steuerungsalgorithmen der künstlichen Intelligenz in geeigneter, vorkonditionierter Weise und Menge zugeführt und während des Verbleibs weiterhin konditioniert wird und nach der Beladung mit CO₂ einer oder mehreren chemischen, physikalischen oder mechanischen Reinigungs- oder Aufbereitungs- oder Aufkonzentrationsvorrichtungen oder beliebiger Kombinationen derselben zugeführt wird, wobei mittels dieser Vorrichtungen mindestens eine physikalische Phase erzeugt wird, die hinsichtlich des aus dem atmosphärischen Gas stammenden Kohlenstoffs eine höhere Kohlenstoffkonzentration besitzt als die übrigen Phasen und diese mit Kohlenstoff aus dem atmosphärischen Gas angereichter Phase einem geeignetem Lagerraum zu geführt wird, während die übrigen Phasen nach einer erneuten Konditionierung der CO₂ Absorptionsvorrichtung ganz oder teilweise wieder zugeführt werden oder verworfen werden.

Die für die Absorption von CO₂ geeignete Flüssigkeit (Absorptionsflüssigkeit) kann ein Reinstoff, eine Lösung, eine Emulsion, eine Dispersion oder eine zweiphasige Mischung sein. Die Absorptionsflüssigkeit enthält neben Wasser als Lösungsmittel bzw. dominierender Phase mindestens eine oder mehrere feste oder flüssige Chemikalien der folgenden Material- bzw. Substanzklassen: Amine, Zeolithe, Silica, aktivierte Graphite, metallische Pulver, Kationen der ersten und oder der zweiten Hauptgruppe des Periodensystems der chemischen Elemente, anionische Substanzen, organische Säuren sowie deren Salze, Aminosäuren sowie deren Salze und Derivate derselben. Die Absorptionsflüssigkeit ist unabhängig von ihrer materiellen und chemischen Zusammensetzung innerhalb der erfindungsgemäßen Absorptionsvorrichtung immer flüssig.

Die mechanische Konstruktion des Bereiches, in dem das atmosphärischen Gas mit der planaren nicht dispersen Flüssigkeitsoberfläche in Kontakte kommt, wird im Folgenden als Kontaktor bezeichnet. Der Kontaktor kann so gestaltet sein, dass sich mindestens ein vertikaler planarer nicht disperser Flüssigkeitsfilm der Absorberflüssigkeit ausbildet oder mindestens eine horizontale planare nicht disperse Flüssigkeitsoberfläche der Absorberflüssigkeit. Die Ausbildung von horizontalen Flüssigkeitsoberflächen erfolgt durch geeignete Behälter oder Wannen, die entgegengesetzt zur Richtung der Schwerkraft offen sind, so dass atmosphärische Gas mit der Oberfläche der Absorberflüssigkeit in Kontakt treten kann. Die zur Umgebung offene Behälteroberseite kann eine oder mehrere poröse gasdurchlässige Einbauten besitzen, die zur Abscheidung von partikulären Verunreinigungen aus dem atmosphärischen Gas geeignet sind. Diese Einbauten können Siebe, Netze, Stege, Gewebe, oder Vliese, die zur Abtrennung oder Zurückhaltung von partikulären Verunreinigungen geeignet sind, sein. Die Behälter können eine für die Überströmung des atmosphärischen Gases optimierten Seitenwandkontur und Seitenwandhöhe besitzen, wobei die Optimierung sowohl die Minimierung des Strömungswiderstands als auch die Erhöhung der Kontaktintensität des atmosphärischen Gases mit der Absoberflüssigkeit zum Ziel hat. Die Behälter oder Wannen können eine Überlauf- oder Auslaufvorrichtung besitzen, die dazu geeignet ist, den Füllstand der Absoberflüssigkeit zu steuern oder zu regulieren.

Die Behälter können einen ebenen oder konturierten Boden besitzen, der zur Schwerkraft senkrecht oder in einem davon abweichenden Winkel steht. Der Behälterboden kann dreieckig, rechteckig, vieleckig, rund, oval, ellipsoid oder beliebig andersartig gestaltet sein. Die Behälter können weitere Einbauten wie z.B. Siebe, Netze, Stege, Gewebe, Vliese, die zur Abtrennung oder Zurückhaltung von partikulären Verunreinigungen aus der Absoberflüssigkeit geeignet sind, besitzen. Die Behälterwände können unterschiedliche, von Null verschiedene Winkel zum Behälterboden bilden.

Die Ausbildung von vertikalen planaren nicht dispersen Flüssigkeitsoberflächen kann durch eine filmbildende, der Schwerkraft folgende Überströmung der Absorberflüssigkeit von dazu geeigneten festen Materialien entsprechenden Kontur erfolgen. Die geeigneten Konturen können durch Platten, Vollzylinder, geschnittene Zylinder, geschlossene Rohre, teilweise oder ganz geöffnete Rohre oder andere konvexe oder konkave Geometrien dargestellt werden. Die Abmessung dieser Objekte ist sehr groß im Verhältnis zur Dicke des sich ausbildenden Films der Absorberflüssigkeit. Die Oberflächenrauigkeit der filmtragenden Konturen ist so ausgeführt, dass die Rauigkeit klein im Vergleich zur Filmdicke der Absorberflüssigkeit ist. Die für die Überströmung geeigneten Konturen können parallel zur Schwerkraft verlaufen oder in einem davon abweichenden Winkel, der so gewählt ist, dass der Flüssigkeitsfilm der Absorberflüssigkeit sich nicht von der Kontur ablöst und es somit nicht zu einem freifallenden Film oder zu einer Ablösung von einzelnen oder mehreren Tropfen, Fragmenten oder Rinnsalen kommt.

Der Kontaktor kann so gestaltet sein, dass sowohl mindestens ein nicht horizontaler, planarer nicht disperser Flüssigkeitsfilm der Absorberflüssigkeit ausgebildet wird, also auch mindestens eine horizontale planare nicht disperse Flüssigkeitsoberfläche der Absorberflüssigkeit. In jeder Ausführungsform sind die entsprechenden planaren nicht dispersen Flüssigkeitsoberflächen für das im Kontaktor vorhandene atmosphärische Gas zugänglich, wobei der gesamte Kontaktor ggf. vollständig oder teilweise umschlossen sein kann von hochporösen gasdurchlässigen Vorrichtungen, die das Eindringen von unerwünschten grobkörnigen Verunreinigungen wie z.B. tote oder lebende Tiere, Vogelkot, Blätter, Gräser, Samen, Pollen verhindern. Wenn mehr als eine horizontale planare nicht disperse Flüssigkeitsoberfläche der Absorberflüssigkeit in dem Kontaktor vorhanden ist, können diese übereinander in vertikal fluchtender Anordnung oder in vertikal nicht fluchtender Anordnung oder nebeneinander in horizontal fluchtender oder in horizontal nicht fluchtender Anordnung oder in beliebigen Kombinationen dieser Anordnungen positioniert sein.

Der Transport der Absorberflüssigkeit innerhalb eines Kontaktors, sowie die Zufuhr zum Kontaktor und der Abtransport vom Kontaktor kann durch Pumpen oder andere geeignete Fördervorrichtungen oder durch die Wirkung der Schwerkraft erfolgen.

Die Anordnung der mechanischen Bauteile innerhalb des Kontaktors, die zur Darstellung einer horizontalen oder vertikalen planaren nicht dispersen Flüssigkeitsoberfläche geeignet sind, können so ergänzt bzw. ausgestaltet sein, dass bei hohen Gasgeschwindigkeiten der umgebenden Atmosphäre eine Ablösung von Flüssigkeitstropfen von der Oberfläche der Absorberflüssigkeit im Kontaktor verhindert wird. Dazu können eine oder mehrere Vorrichtungen zur Beeinflussung der für das atmosphärische Gas zugänglichen freien Durchtrittsflächen vorhanden sein, so dass der für die Durchströmung des atmosphärischen Gases vorhandene freie Querschnitt den Umgebungs- und Prozessbedingungen angepasst werden kann, bis hin zur vollständigen Verriegelung des Kontaktors für das Eindringen von äußerem atmosphärischem Gas. Die gasseitige Durchströmung des Kontaktors erfolgt in jedem Fall immer ohne Verwendung von Förder-, Transport-, Ventilations- oder Pumpvorrichtungen, also ohne Verwendung von zusätzlicher artifizieller Energie.

Die Absorberflüssigkeit kann innerhalb des Kontaktors temperiert werden, dabei kann Wärme zu oder abgeführt werden. Die Zufuhr von Wärme kann durch erwärmte, mit der Absorberflüssigkeit in kontaktstehende Oberflächen erfolgen und oder durch elektromagnetische Bestrahlung der Absorberflüssigkeit bzw. von Bauteilen, die die Absorberoberfläche berühren und oder durch Einleitung von heißen bzw. vorgewärmten weiteren oder identischen Flüssigkeiten. Die Kühlung der Absoberflüssigkeit kann durch gekühlte mit der Absorberflüssigkeit in Kontakt stehende Oberflächen erfolgen und/oder durch Einleitung von kalten oder gefrorenen weiteren oder identischen Reinstoffen oder Stoffgemischen.

Zur Erhöhung des CO₂-Stoffübergangs und des CO₂-Stofftransports kann die Absorberflüssigkeit im Kontaktor durch Rühren, Schwenken, Schwallen, Infraschall, Schall oder Ultraschall zusätzlich in Bewegung versetzt werden. Dabei wird allerdings immer sicher ausgeschlossen, dass es zu einer Bildung von dispersen Fragmenten der Absorberflüssigkeit kommt, d.h. es entstehen keine Tropfen oder andersartige Flüssigkeitsfragmente oder freifließende Rinnsale, die sich aus der Absoberflüssigkeit herauslösen.

Nachdem die Absoberflüssigkeit den Bereich der Ausbildung der planaren nicht dispersen Oberflächengestaltung verlassen hat, kann sie teilweise oder ganz einer oder mehreren Reinigungseinheiten zugeführt werden, in der die Abtrennung von dispersen Komponenten oder dispersen Verunreinigungen erfolgt. Dazu geeignete Apparate und Vorrichtungen können Filter, Abscheider, Zentrifugen, Separatoren oder Flotatoren sein. Ist die Absoberflüssigkeit eine Emulsion oder Dispersion, kann in der Reinigungseinheit oder in mehreren Reinigungsstufen eine Abtrennung oder Aufkonzentrierung von dispersen Aktivmaterialien, die den aus dem atmosphärischen Gas stammenden Kohlenstoff in Form von Kohlendioxid oder chemischen Folgeprodukten gebunden haben, oder die diesbezüglich die kohlenstoffreiche Phase darstellen, erfolgen.

Die Absoberflüssigkeit bzw. die mit dem aus Atmosphäre stammenden Kohlenstoff angereichter Phase werden abschließend der Regeneration zugeführt. Die Regeneration erfolgt in einem zur Absorption räumlich getrennten und zur Atmosphäre ggf. geschlossen Bauraum. In diesem Bauraum können die Verfahrensbedingungen so eingestellt werden, dass sich eine physikalische Phase ausbildet, die eine hohe Beladung des aus dem atmosphärischen Gas stammenden Kohlenstoff besitzt und sich mindestens eine weitere Phase ausbildet, die diesbezüglich eine niedrige Beladung besitzt. Die angereicherte Phase kann in nachgelagerten Verfahrensschritten weiter aufkonzentriert werden und dann zwischengespeichert, gelagert oder zur Weiterverarbeitung abtransportiert werden. Alternativ kann die, den aus dem atmosphärischen Gas stammenden Kohlenstoff enthaltende Substanz durch chemische Reaktion in die chemischen Elemente dissoziiert werden oder unter Zuhilfenahme von mindestens einer weiteren Substanz durch chemische Reaktion in eine andere Substanz umgewandelt werden. Die von Kohlenstoff aus dem atmosphärischen Gas abgereicherte Phase kann in nachfolgenden, separaten Verfahrensräumen weiter konditioniert werden, so dass diese wieder ganz oder teilweise der Absorptionsvorrichtung zugeführt werden kann oder sie wird dauerhaft aus dem Verfahren ausgeschleust und verworfen oder anderweitig genutzt.

### 2.2 Dynamische Steuerung

Das gesamte Verfahren zur Absorption von CO₂ und zur Regeneration der Absorberflüssigkeit wird von einer übergeordneten elektronischen Datenverarbeitungsvorrichtung dynamisch geregelt. Die dynamische Regelung kann die Nutzung von internetbasierten Informationsquellen, statischen, dynamischen oder historischen Datenbanken, selbstlernenden dynamische und statischen Algorithmen und Sensoren beinhalten und nutzt dabei die Methoden der artifiziellen Intelligenz. Das Ziel ist die Minimierung des spezifischen Energieverbrauchs und die Maximierung der Netto negativen CO₂ Emissionen des erfindungsgemäßen Verfahrens. Die dynamische Regelung kann auf Basis von gemessenen, vorhergesagten, erwarteten und gelernten Umgebungs- und Prozessparametern die relevanten zukünftigen Prozessparameter steuern und regeln. Die wesentlichen Umgebungsparameter, die Berücksichtigung finden können sind solare Strahlungsintensität, Temperatur, Druck, Wasserdampfbeladung und CO₂ Beladung des atmosphärischen Gases, Windgeschwindigkeit, Windrichtung, Turbulenzgrad der bodennahen Atmosphäre, Beladung der Atmosphäre mit dispersen Verunreinigungen ( Staub, Blätter, Pollen, etc.), sowie die jeweilige erste und zweite Ableitung dieser zeitlich veränderlichen Parameter, wobei diese Parameter nicht nur lokal in der Nähe der Anlage sondern auch überregional erfasst werden können und in die Steuerungsalgorithmen hinsichtlich zeitlich erwartbarer Veränderungen ein fliesen können. Die dynamische Regelung der Absorption umfasst die Regelung der freien Durchtrittsfläche für das atmosphärische Gas in den Kontaktor, sowie die Regelung von Fließgeschwindigkeit, Massenstrom, Verweilzeit, Temperatur und initiale CO₂-Beladung der Absorberflüssigkeit und die innere und äußere Rückführungsrate und deren Ort für die Entnahme und Zuführung und die CO₂-Beladung der Absorberflüssigkeit beim Verlassen der Absorbereinheit und die Beladung der für die Absorption geeigneten aktiven Substanzen innerhalb der Absorberflüssigkeit. Die Prozessparameter können unter Berücksichtigung von faktischen, vorhergesagten, erwarteten und gelernten Umgebungsparametern mittels selbstlernender Algorithmen auf Basis künstlicher Intelligenz so optimiert werden, dass das Verfahren den niedrigsten möglichen Energieverbrauch pro Masseneinheit absorbierten CO₂ hat. Dabei können neben den Umgebungsbedingungen auch die bauraum- und materialspezifischen Latenzen sowie die Verfügbarkeit von elektrischer Energie aus regenerativen Quellen berücksichtigt und deren spezifisches Änderungskinetik angelernt werden.

### 3. Beschreibung der Zeichnungen

Fig. 1 ist eine Darstellung des thermischen und elektrischen Energiebedarfs für die Absorption von CO₂ aus der Atmosphäre mit Direct Air Capture Anlagen nach dem Stand der Technik.
Fig. 2 ist eine beispielhafte Darstellung der Verteilung der Windgeschwindigkeit in Bodennähe.
Fig. 3 ist eine Ansicht des exemplarischen Aufbaus des Kontaktors.
Fig. 4 ist eine Seitenansicht des Kontaktors von Fig. 3.
Fig. 5 ist eine Detailansicht des Kontaktors von Fig. 3 und Fig. 4.
Fig. 6 ist eine beispielhafte Darstellung des DPAT-Verbundsystems, bestehend aus mehreren Kontaktoren mit zentraler Regenerations- und Steuereinheit.
Fig. 7 ist eine beispielhafte Darstellung von Eingangsparametern, die von der dynamischen Prozesssteuerung verarbeitet werden.
Fig. 8 ist eine beispielhafte Darstellung von Steuerungsparametern, die basierend auf Eingangsparametern, dynamisch von der KI-gestützten Steuerungseinheit ausgewählt und angepasst werden.

### 4. Beispiel zur Ausführung

### 4.1. Aufbau und Funktion

Die folgende Ausführung beschreibt eine exemplarische Nutzung der dymanisch passiven Absorptionsturm Technologie (DPAT). Dabei stellt die beispielhafte, im folgende präsentierte, Ausgestaltung explizit nur eine Möglichkeit aus einer Vielzahl möglicher Konfigurationen dar, und dient ausschließlich zur anschaulichen Unterstützung.

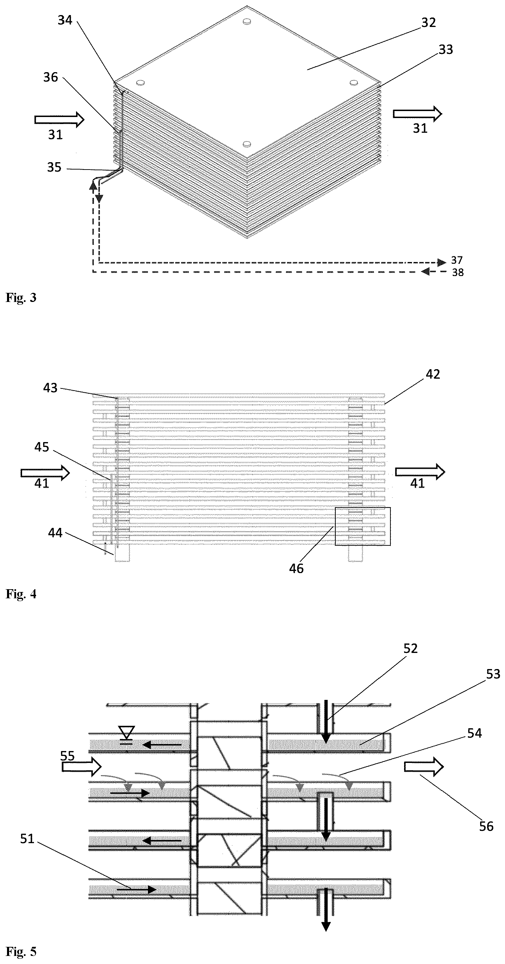

Fig. 3 und Fig. 4 stellen einen möglichen Aufbau eines Kontaktors dar, der den erfindungsgemäßen Anforderungen aus Kapitel 2 genügt. Insbesondere stellt die dargestellte Bauform sicher, dass die gasseitige Durchströmung des Kontaktors (31,41) ohne Nutzung zusätzlicher Förder- oder Pumpvorrichtungen erfolgt. Der in Fig. 3 und Fig. 4 dargestellte Kontaktor macht dabei von der Möglichkeit Gebrauch mehrere horizontal planare, nicht disperse Flüssigkeitsoberflächenen auf verschiedenen horizontalen Ebenen zu erzeugen. In der beispielhaften Ausgestaltung geschieht dies durch den Einsatz von Wannen. Das hier gezeigte Beispiel macht von der in Kapitel 2 beschriebenen Möglichkeit zur Verwendung von porösen, luftdurchlässigen Einbauten, keinen Gebrauch. Zufluss (38) und Abfluss (37) der Absorptionsflüssigkeit ist auf verschiedenen Ebenen (34, 35, 36, 43, 44) möglich.

Eine Detailansicht der Wandstruktur der Wannen (46) ist in Fig. 5 zu sehen. Seitenwandhöhe und Seitenwandkontur sind dabei für den beispielhaften Anwendungsfall optimiert. Am Beispiel gemäß Fig. 3 wird eine aus Wasser und Aminosäure (L-Arginin 0,65 mol/l) bestehenden Lösung als Absorptionsflüssigkeit eingesetzt (53), die in der Lage ist CO₂ an der Grenzfläche zwischen Flüssigkeit und Gasphase, innerhalb der jeweiligen Wannen zu binden (54). Der CO₂ Partialdruck über der frischen L-Arginin Lösung beträgt bei Raumtemperatur ca. 1-3 ppm. Bei einer Beladung von 0,5 mol CO₂/l Lösung beträgt der CO₂ Partialdruck ca. 300 -350 ppm. Der CO₂ Partialdruck in der anströmenden Umgebungsluft (55) beträgt zwischen 390 und 440 ppm. Die Windgeschwindigkeit im Abstand von einem Meter beträgt 1,5 - 2,3 m/s. Der Volumenstrom der Absorptionslösung beträgt 11/h. Der CO₂ Partialdruck auf der, dem Wind abgewandten Seite der Vorrichtung (56), beträgt zwischen 40 und 100 ppm. Es zeigt sich, dass die CO₂ Beladung, der durch die Vorrichtung strömenden Luft um 290 - 400 ppm reduziert wird, wobei zum Transport der Umgebungsluft keine Energie eingesetzt wird und da keine Regeneration in der Vorrichtung stattfindet, die Absorption beliebig lange ohne Unterbrechung also auch 24 Stunden pro Tag betrieben werden kann. Das in Fig. 5 exemplarisch gezeigte Fließverhalten (51) der Flüssigkeit resultiert im dargestellten Beispiel aus dem Einsatz von flüssigkeitsfördernden Pumpen. Zusätzlich wird im Beispiel der Flüssigkeitsstrom durch höhenverstellbare Überlaufvorrichtungen innerhalb jeder Wanne unter Nutzung der Schwerkraft eingestellt (52). Die Möglichkeit geeignete, filmbildende Körper zur Veränderung der Oberflächeneigenschaften der Flüssigkeit, findet im darstellten Beispiel keine Anwendung. Eine Temperierung der Flüssigkeit findet im Beispiel durch in den Wannenboden integrierte Heizelemente statt. Von der Möglichkeit einer Einrichtung zur Kühlung der Flüssigkeit im Sinne des Kapitel 2 wird an dieser Stelle abgesehen. Auch verzichtet die beispielhafte Darstellung auf zusätzliche Vorrichtungen zur Erhöhung des CO₂ Stoffübergangs, wie beispielsweise Rühren oder Schwenken.

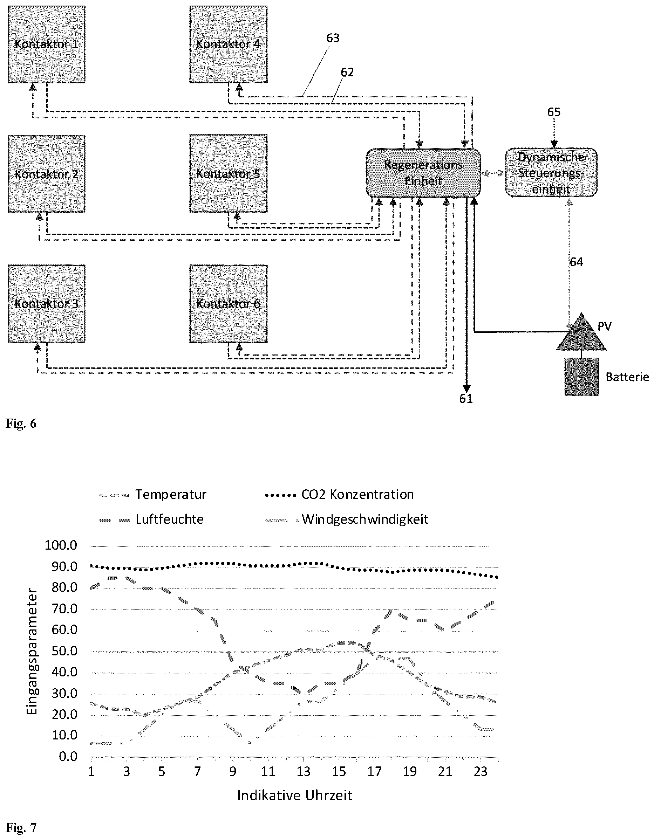

Zur Aufbereitung und Regeneration wird die Absorberflüssigkeit, im Sinne des Kapitel 2, an einen räumlich vom Kontaktor getrennten Ort gefördert (62). Von der Möglichkeit zur modularen Anordnung mehrerer Kontaktoren und einer zentralen Aufbereitungs- und Regenerationseinheit macht das Beispiel gebrauch, siehe Fig. 6. Der hier dargestellte Verbund besteht aus sechs baugleichen Kontaktoren, und einer zentralen Aufbereitungs- und Regenerationseinheit. An die Regenerationseinheit angeschlossen befindet sich im Beispiel die Pump- und Förderinfrastruktur, die eine parallele, sequenzielle, oder individualisierte Versorgung der Kontaktoren mit Absorptionsflüssigkeit ermöglicht (63). Das in der Regenerationseinheit aus der Absorptionsflüssigkeit austretende CO₂ wird aufkonzentriert und für die temporäre oder dauerhafte Speicherung, sowie Weiterverarbeitung in anderen Wertstoffkreisen vorbereitet (61). Im dargestellten Beispiel findet eine rein thermische Regeneration der Absorptionsflüssigkeit statt. Die Energieversorgung kommt im beschriebenen Beispiel von einer Photovoltaik Anlage, die um einen Batteriespeicher ergänzt ist. Sowohl zum Einsatz der Regenerationsverfahren wie auch der Energieversorgung nimmt die in Kapitel 2 beschriebene Erfindung keine Einschränkungen vor.

### 4.2. Dynamische Steuerung

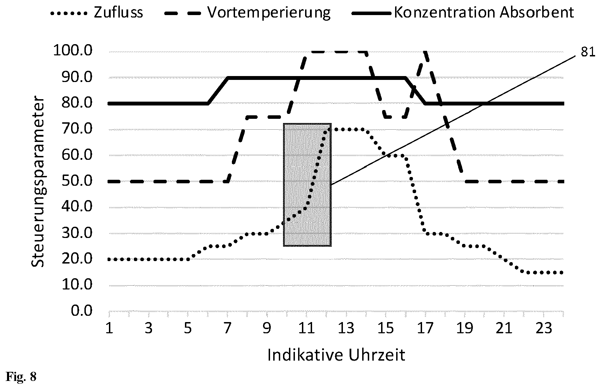

Die zur Prozesssteuerung genutzte Zentraleinheit ist in Fig. 6 mit den Kontaktoren und der Regenerationseinheit bidirektional verknüpft. Außerdem bietet die Verknüpfung zur Energie-Erzeugungseinheit, die im Beispiel aus einer Photovoltaik-Anlage mit Batteriespeicher besteht, Zugang zu relevanten Daten (64). Weitere relevante Daten werden im Beispiel über eine Verbindung der Zentralen Steuereinheit mit online-Datenquellen generiert (65). In der tatsächlichen Anwendung ist eine Visualisierung der Vielzahl unterschiedlicher Eingangsparameter schwierig. Exemplarisch stellt Fig. 7 daher eine einfache Auswahl des zeitlichen Verlaufs relevanter Eingangsparameter dar. Die Zentrale Steuereinheit prozessiert diese Daten, und erstellt im dargestellten Beispiel mit Hilfe von selbstlernenden Algorithmen, sich kontinuierlich verbessernde Empfehlungen für Steuerungsparameter der Kontaktoren, Pumpen und Regenerationseinheit. Beispielsweise wird auf Grund der prognostizierten, erhöhten Windgeschwindigkeit ab 15 Uhr in Fig. 7, frühzeitig die Zuflussgeschwindigkeit der Absorptionsflüssigkeit in die Kontaktoren erhöht (81), siehe Fig. 8. Der hierdurch verursachte Anstieg an Absorptionsflüssigkeit innerhalb der Wannen der Kontaktoren führt zu einer optimalen Ausnutzung des Potentials natürlicher Ventilation. Gleiches gilt, beispielsweise, für eine Vortemperierung der Wannen, oder Regulierung des Regenerationsprozesses um stets umwelt- und kostenoptimale Bedingungen innerhalb des *DTAP* Gesamtverbundes zu erreichen. Auch eine Berücksichtigung des Energieerzeugungsprofils auf die Bestimmung der Steuerungsparameter wird durch den Einsatz selbstlernender Algorithmen und Modellen in der Zentralen Steuereinheit ermöglicht.

Insgesamt verdeutlicht dieses Beispiel einen, der vielfältigen Lösungsansätze, die mit Hilfe des DPAT Ansatzes realisiert werden können, und durch die umwelt- und kostengünstige Absorption von atmosphärischem CO₂ einen wirkungsvollen Beitrag zum Klimaschutz leisten werden.

## Patentansprüche

1. Verfahren und Vorrichtung zur Absorption von CO₂ aus der Atmosphäre **dadurch gekennzeichnet, dass** atmosphärisches Gas ohne Verwendung von zusätzlichen, energieverbrauchenden Fördervorrichtungen ausschließlich aufgrund der natürlichen Umgebungsbedingungen in die erfindungsgemäße Vorrichtung eindringt und dabei in Kontakt mit mindestens einer planaren, homogenen, nicht dispersen Flüssigkeitsoberfläche tritt, die mindestens eine Substanz enthält die geeignet ist CO₂ chemisch und oder physikalisch zu binden, so dass der CO₂ Partialdruck an der Flüssigkeitsoberfläche, bei den in der Vorrichtung vorherrschenden Bedingungen kleiner ist als der CO₂ Partialdruck des eindringenden atmosphärischen Gases, wobei die zur Absorption von CO₂ geeignete Flüssigkeit der erfindungsgemäßen Vorrichtung unter Anwendung von Steuerungsalgorithmen der künstlichen Intelligenz in geeigneter, vorkonditionierter Weise und Menge zugeführt und während des Verbleibs weiterhin konditioniert wird und nach der Beladung mit CO₂ mittels einer Fördervorrichtung oder der Schwerkraft folgend einer oder mehreren chemischen, physikalischen oder mechanischen Reinigungs- oder Aufbereitungs- oder Aufkonzentrationsvorrichtungen oder beliebiger Kombinationen derselben zugeführt wird, wobei mittels dieser Vorrichtungen mindestens eine physikalische Phase erzeugt wird, die hinsichtlich des aus dem atmosphärischen Gas stammenden Kohlenstoffs eine höhere Kohlenstoffkonzentration besitzt als die übrigen Phasen und diese mit Kohlenstoff aus dem atmosphärischen Gas angereichter Phase einem geeignetem Lagerraum zu geführt wird, während die übrigen Phasen nach einer erneuten Konditionierung der CO₂ Absorptionsvorrichtung ganz oder teilweise wieder zugeführt werden oder verworfen werden.

2. Verfahren und Vorrichtung nach Anspruch 1, **dadurch gekennzeichnet, dass** die für die Absorption von CO2 geeignete Flüssigkeit in der Vorrichtung als flüssiger Reinstoff, flüssige Lösung, flüssige Emulsion, flüssige Suspension oder flüssige Dispersion vorliegt.

3. Verfahren und Vorrichtung nach Anspruch 1 und 2, **dadurch gekennzeichnet, dass** die für die Absorption von CO₂ geeignete Flüssigkeit flüssiges Wasser als Lösungsmittel und kontinuierlicher Phase und mindestens eine feste oder flüssige Chemikalie aus der Substanzklasse der Amine, Zeolithe, Silicate, aktivierten Graphite, metallischen Pulver, Kationen der ersten oder der zweiten Hauptgruppe des Periodensystems der chemischen Elemente, anionischen Substanzen, organischen Säuren sowie deren Salze, Aminosäuren sowie deren Salze und Derivate und beliebige Kombinationen derselben enthält.

4. Verfahren und Vorrichtung nach Anspruch 1-3, **dadurch gekennzeichnet, dass** in der Vorrichtung eine oder mehrere homogene, planare nicht disperse Flüssigkeitsoberflächen, der für die CO₂ Absorption geeigneten Flüssigkeit, als horizontale oder in einem von der horizontalen abweichenden Winkel ausgebildet sind, wobei die äußere, zur Atmosphäre weisende Umrandung der gesamten Vorrichtung segmentweise individuell regelbare Verschlussvorrichtungen besitzt, die vollständig, teilweise oder gar nicht verschlossen sind.

5. Verfahren und Vorrichtung nach Anspruch 1-4, **dadurch gekennzeichnet, dass** zur Ausbildung von horizontalen Flüssigkeitsoberflächen Behälter oder Wannen oder Gefäße oder andere mehrseitig geschlossene Konstruktionen verwendet werden, die mindestens entgegengesetzt zur Richtung der Schwerkraft ganz oder teilweise offen sind und einzeln oder mehrfach übereinander oder nebeneinander oder übereinander und nebeneinander angeordnet sind, wobei die geometrischen Konturen und Höhen und Abstände der nicht horizontalen Wände derselben, so ausgestaltet sind, das der Strömungswiderstand für das eindringende atmosphärische Gas minimiert ist.

6. Verfahren und Vorrichtung nach Anspruch 1-5, **dadurch gekennzeichnet, dass** die zur Ausbildung von horizontalen Flüssigkeitsoberflächen geeigneten Behälter, Wannen, Gefäße oder mehrseitig geschlossenen Konstruktionen jeweils mindestens eine Einlaufvorrichtung und mindestens eine Aus- oder Überlaufvorrichtung besitzen, die einzeln oder gemeinschaftlich dazu geeignet sind das Niveau der Flüssigkeitsoberflächen zu steuern und zu regulieren.

7. Verfahren und Vorrichtung nach Anspruch 1-6, **dadurch gekennzeichnet, dass** die zur Ausbildung von horizontalen Flüssigkeitsoberflächen geeigneten Behälter, Wannen, Gefäße oder mehrseitig geschlossenen Konstruktionen einen ebenen oder konturierten Boden besitzen, der zur Schwerkraft in einem Winkel von 45 Grad bis 90 Grad steht, wobei der Behälterboden dreieckig, rechteckig, vieleckig, rund, oval, ellipsoid oder beliebig andersartig gestaltet ist.

8. Verfahren und Vorrichtung nach Anspruch 1-7, **dadurch gekennzeichnet, dass** die zur Ausbildung von horizontalen Flüssigkeitsoberflächen geeigneten Behälter, Wannen, Gefäße oder mehrseitig geschlossenen Konstruktionen weitere flüssigkeitsbenetzte Einbauten wie Siebe, Netze, Stege, Gewebe, Vliese, oder Filterelemente besitzen, die zur Abtrennung oder Zurückhaltung von Partikeln, aus bzw. in der Flüssigkeit geeignet sind.

9. Verfahren und Vorrichtung nach Anspruch 1-4, **dadurch gekennzeichnet, dass** die Ausbildung von nicht horizontalen, planaren, homogenen, nicht dispersen Flüssigkeitsoberflächen durch eine filmbildende, von der Schwerkraft angetriebene Überströmung von einem oder mehreren dazu geeigneten Trägerelementen, welche dazu geeignete Konturen besitzen, erfolgt, wobei die Oberflächen der Trägerelemente je nach Einbaulage einen Winkel von 0 Grad bis 89 Grad zur Vertikalen bilden.

10. Verfahren und Vorrichtung nach Anspruch 1-4 und 9 **dadurch gekennzeichnet, dass** die Oberfläche der Trägerelemente die Geometrie von Platten, Vollzylindern, geschnittenen Zylindern, geschlossenen Rohren, teilweise oder ganz geöffneten Rohren oder anderen konvexen oder konkaven Geometrien oder Kombinationen derselben besitzt und durch die, für die Absorption von CO₂ geeignete Flüssigkeit, gut benetzbar ist.

11. Verfahren und Vorrichtung nach Anspruch 1-10, **dadurch gekennzeichnet, dass** die gesamte Vorrichtung vollständig oder teilweise umschlossen ist von einer dünnen, gasdurchlässigen Schutzhülle hoher Porosität, die dazu geeignet ist, partikuläre Verunreinigungen aus dem, in die Vorrichtung eindringenden atmosphärischen Gas, zurückzuhalten, wobei die Porosität der gasdurchlässigen Schutzhülle vorzugsweise höher ist als 75%.

12. Verfahren und Vorrichtung nach Anspruch 1-11, **dadurch gekennzeichnet, dass** die für die Absorption von CO₂ geeignete Flüssigkeit in der Vorrichtung temperiert wird.

13. Verfahren und Vorrichtung nach Anspruch 1-12, **dadurch gekennzeichnet, dass** die artifiziell steuer- und regelbaren Prozessparameter des Verfahrens mit Hilfe von historischen, momentanen und prognostizierten regionalen und überregionalen Wetter- und Klimadaten, unter Einbeziehung von statischen, dynamischen, und komplexen selbstlernenden dynamischen Algorithmen und Sensoren und Aktuatoren eingestellt werden.

14. Kohlendioxid erhältlich nach dem Verfahren gemäß Anspruch 1-13.

15. Verwendung des Kohlendioxid gemäß Anspruch 14 als Edukt für die Synthese von Kohlenwasserstoffen.
